# DEMANDE DE BREVET EUROPEEN

(11) **EP 0 895 907 A1**
(43) Date de publication de la demande: **10.02.1999**
(21) Numéro de dépôt: 98401989.3
(22) Date de dépôt: 04.08.1998
(51) Int. Cl.: B60S 1/40

(54) **Essuie-glace comportant des moyens perfectionnés d'articulation du balai d'essuie-glace sur le bras d'essuie-glace**

(30) Priorité: 08.08.1997 FR 9710276
(71) Demandeur: VALEO SYSTEMES D'ESSUYAGE, 78321 La Verrière (FR)
(72) Inventeur: Princet, Joel, 86100 Chatellerault (FR)
(74) Mandataire: Gamonal, Didier

(57) **Abrégé**

L'invention concerne un essuie-glace (10) de véhicule automobile, du type comportant un balai d'essuie-glace (12) articulé autour d'un axe transversal horizontal (A1) à une extrémité avant (14) d'un bras (16), par l'intermédiaire d'un connecteur (18) articulé sur le balai (12), caractérisé en ce que le connecteur (18) comporte un corps principal (30) prolongé par un tronçon arrière (36) comportant des parois latérales (40) qui sont déformables élastiquement, latéralement l'une vers l'autre, afin d'être mises en place entre deux flasques latéraux (17) du bras d'essuie-glace (16) , les parois latérales (40) du connecteur (18) revenant élastiquement vers une position de fixation dans laquelle des moyens de fixation des parois (40) coopèrent avec des moyens complémentaires de fixation, et en ce que le connecteur (18) est articulé entre une position relevée et une position d'utilisation dans laquelle le balai (12) est reçu entre les parois latérales (40) du tronçon (36).

## Description

La présente invention concerne un essuie-glace de véhicule automobile comportant des moyens perfectionnés d'articulation d'un balai d'essuie-glace sur un bras d'essuie-glace.

L'invention concerne en particulier un essuie-glace du type comportant un balai d'essuie-glace qui est articulé en rotation autour d'un axe transversal horizontal à une extrémité avant d'un bras d'essuie-glace, par l'intermédiaire d'un connecteur articulé sur le balai.

Pour l'articulation d'un balai d'essuie-glace sur un bras d'essuie-glace, il est déjà connu d'utiliser un connecteur qui est emboîté élastiquement selon une direction radiale sur une tige d'articulation du balai. Le bras de l'essuie-glace comporte une extrémité de fixation qui est en général courbée longitudinalement pour former un crochet, dans lequel le connecteur est engagé d'arrière en avant, une fois celui ci monté sur le balai d'essuie-glace.

Pour des raisons de rigidité et de concentration des éléments, le balai comporte deux flancs reliés par la tige d'articulation, entre lesquels sont reçus le connecteur et surtout l'extrémité avant de fixation du bras d'essuie-glace. Pour la fixation des différents éléments, le balai doit comporter une ouverture supérieure, par laquelle sont introduits le connecteur et le bras d'essuie-glace.

Cette disposition présente certains inconvénients. La mise en place des éléments et en particulier du bras est compliquée et nécessite une ouverture supérieure sur le balai qui soit suffisamment longue. En effet, étant donné que le connecteur est reçu dans le crochet de fixation avant du bras, l'ouverture supérieure du balai doit être d'une longueur assez importante pour permettre la mise en place du bras entre les flancs latéraux du balai avant que le connecteur ne soit engagé dans le crochet.

Par conséquent, une partie de l'ouverture supérieure du balai demeure visible après la mise en place du connecteur, ce qui est assez néfaste à l'aspect esthétique de l'essuie-glace.

De plus, un connecteur de ce type n'est pas adapté aux bras d'essuie-glaces de type "carter" dont la forme en U inversé s'étend sur toute la longueur du bras.

Afin de résoudre ces problèmes, il a été proposé par exemple, par la demande de brevet DE 42 24 866, un essuie-glace qui a les caractéristiques suivantes :
- l'extrémité du bras comporte deux flasques latéraux ;
- le connecteur est constitué d'un tronçon avant et d'un tronçon arrière ;
- le tronçon arrière est reçu entre les flasques latéraux et présente des parois latérales entre lesquelles est reçu le balai en position d'utilisation ;
- le tronçon avant porte des moyens de montage sur le balai.

Dans cet essuie-glace, le tronçon avant possède des parois latérales entre lesquelles est reçu le balai et se prolonge vers l'avant au-delà des moyens de montage sur le balai.

L'articulation entre le connecteur et le balai s'en trouve limité à des faibles possibilités de rotation.

D'une part l'articulation risque de ne pas pouvoir jouer son rôle sur toute la course de l'essuyage.

D'une part, le balai ne peut pas être remplacé en position relevée, ce qui empêche le démontage du connecteur hors du bras. La seule solution pour démonter le balai est alors de libérer le balai du connecteur, ce qui peut s'avérer difficile puisque les moyens de montage du connecteur sur le balai sont justement prévu résistants.

Avant de résoudre ces problèmes, l'invention propose un essuie-glace du type précédemment décrit, dans lequel le tronçon avant est reçu entre les flancs du balai.

Selon d'autres caractéristiques de l'invention :
- les parois latérales sont déformables élastiquement des moyens de fixation porté s par les parois latérales coopérant avec des moyens complémentaires de fixation agencés sur les flasques latéraux en position de fixation, et en ce que les parois latérales sont maintenues en position de fixation par le balai en position d'utilisation.
- les moyens de fixation portés par le connecteur sont réalisés sous la forme de bossages agencés sur des faces externes des parois latérales du tronçon arrière du connecteur et en ce que les moyens complémentaires portés par les flasques du bras sont réalisés sous la forme d'orifices dans lesquels sont engagés les bossages.
- les moyens de fixation portés par le connecteur sont réalisés sous la forme de bossages agencés sur des faces externes des parois latérales du tronçon arrière du connecteur et les moyens complémentaires portés par les flasques du bras sont réalisés sous la forme d'orifices dans lesquels sont engagés les bossages ;
- le bras de l'essuie-glace comporte un dos supérieur transversal qui réunit les flasques latéraux, et le dos comporte un orifice dans lequel est engagé un bossage agencé sur une face supérieure du tronçon arrière du connecteur pour bloquer longitudinalement le connecteur par rapport au bras, la face supérieure du tronçon arrière étant prolongée verticalement vers le bas par les parois latérales ;
- le corps principal du connecteur est en appui longitudinalement vers l'arrière par une face transversale arrière contre une face transversale avant de l'extrémité avant du bras ;
- le corps principal avant est prolongé vers le bas par une partie inférieure comportant des moyens de fixation et d'articulation du connecteur qui coopèrent avec des moyens complémentaires du balai d'essuie-glace ;
- le balai d'essuie-glace comporte une ouverture supérieure dans laquelle est reçue la partie inférieure du connecteur, et le balai comporte une tige transversale d'articulation, qui relie les flancs latéraux parallèles du balai, sur laquelle est articulée la partie inférieure du connecteur ;
- la partie inférieure du connecteur comporte des pinces élastiques qui enserrent la tige transversale du balai d'essuie-glace pour réaliser l'articulation du connecteur par rapport au balai ;
- les parois latérales du tronçon arrière du connecteur sont prolongées vers l'avant par des extensions latérales, qui sont solidaires du corps principal du connecteur et qui s'étendent sensiblement verticalement en regard de la partie inférieure, chacune d'un coté de celle-ci ;
- des faces externes du corps principal du connecteur sont agencées dans le prolongement de faces externes correspondantes de l'extrémité avant du bras.

D'autres caractéristiques et avantages de-l'invention apparaîtront à la lecture de la description détaillée qui suit pour la compréhension de laquelle on se reportera aux dessins annexés dans lesquels :
- la figure 1 est une vue partielle en perspective éclatée du balai d'essuie-glace, du connecteur et du bras d'essuie-glace avant le montage ;
- la figure 2 est une vue en coupe longitudinale des composants de l'essuie-glace montés en position d'utilisation ;
- la figure 3 est une vue en coupe transversale selon la ligne 3-3 de la figure 2 ; et
- la figure 4 est une vue similaire à celle de la figure 3, en coupe selon la ligne 4-4 de la figure 2.

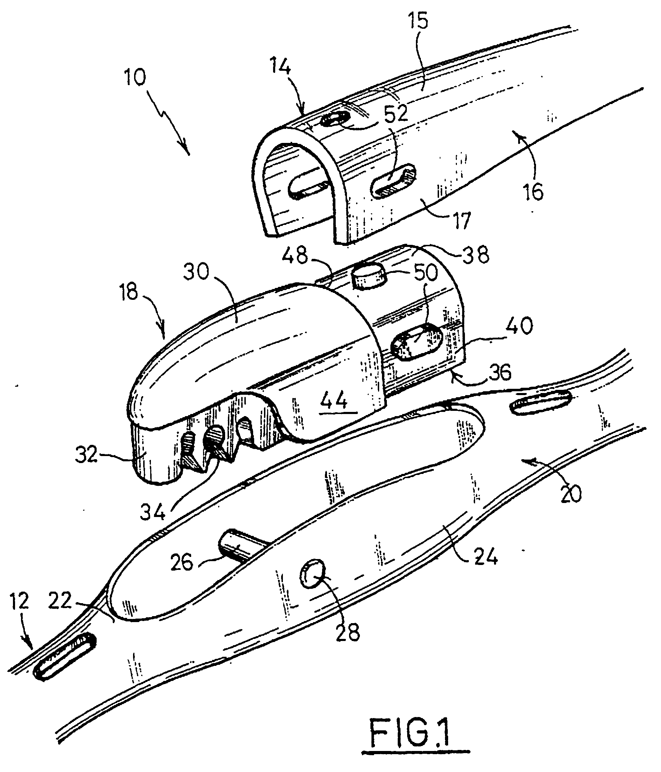

On a représenté sur la figure 1 un essuie-glace 10 comportant un balai d'essuie-glace 12 destiné à être monté autour d'un axe transversal A1, horizontal en considérant les figures, à l'extrémité longitudinale avant 14 d'un bras d'essuie-glace 16.

Pour effectuer la connexion et l'articulation du balai 12 sur le bras 16, il est prévu un connecteur 18, qui est agencé sur le balai 12 sur une portion d'articulation 20 d'un étrier principal 22 du balai 12, et qui est destiné à être fixé à l'extrémité avant 14 du bras 16.

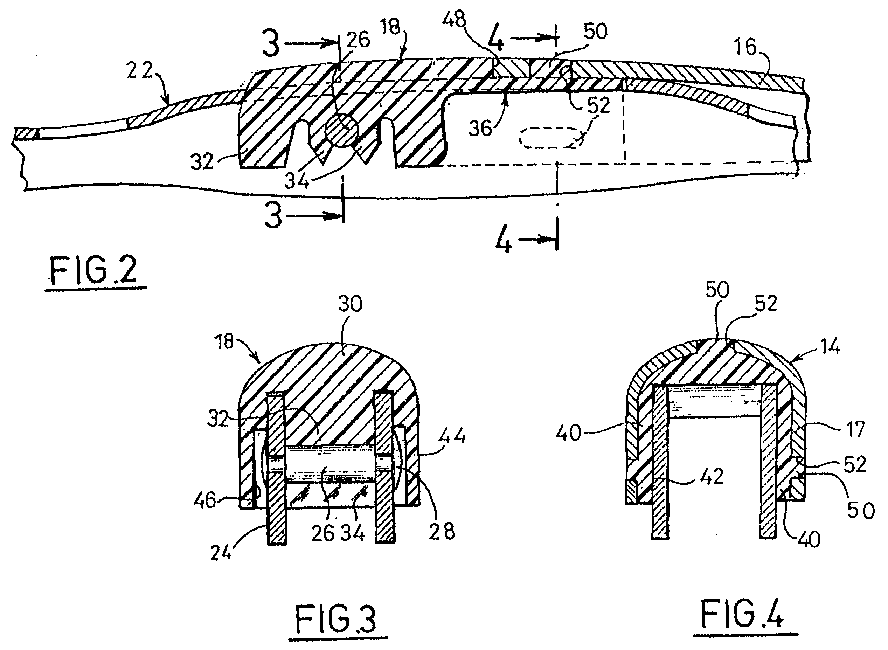

Comme on peut le voir sur la figure 1, le balai d'essuie-glace 12 comporte deux flancs latéraux 24 parallèles, reliés entre eux par une tige transversale d'articulation 26, d'axe A1, autour de laquelle sont articulés le connecteur 18 et le bras d'essuie-glace 16. Comme on peut le voir plus particulièrement sur la figure 3, la tige d'articulation 26 peut être agencée sur les flancs latéraux 24 par emboutissage des extrémités latérales 28, ou par tout autre moyen habituel, lorsque ces extrémités dépassent latéralement à l'extérieur des flancs 24.

Sur cette même figure 1, on a représenté le bras d'essuie-glace 16 dont l'extrémité avant 14 comporte un dos supérieur 15 qui établit une liaison entre deux flasques latéraux 17. Le bras d'essuie-glace est donc du type "carter", en forme générale de U inversé, et il est prévu pour chevaucher une partie de l'étrier principal 22.

La liaison entre le balai 12 et le bras 16 est effectuée par le connecteur 18 comportant un corps principal dont le tronçon avant présente une partie inférieure 32 destinée à être agencée entre les flancs latéraux 24 du balai d'essuie-glace 12. Cette partie inférieure 32 porte des moyens d'articulation du connecteur 18 sur le balai d'essuie-glace 12 qui sont réalisés sous la forme de pinces élastiques 34. Ces pinces élastiques 34 sont agencées sur la tige d'articulation 26 par emboîtement comme on peut le voir plus particulièrement sur la figure 2 dans laquelle le connecteur 18 est fixé sur la tige d'articulation 26.

Le connecteur 18 est prolongé vers l'arrière par un tronçon arrière 36 qui comporte une plaque supérieure 38 regroupant des parois latérales 40 qui s'étendent sensiblement verticalement vers le bas. Le tronçon arrière 36 est donc lui aussi en forme générale de U inversé et sa forme est complémentaire de celle du bras d'essuie-glace 16, ces deux composants étant fixés l'un au contact de l'autre.

Les parois latérales 40 du tronçon arrière 36 du connecteur sont déformables élastiquement, et peuvent être déplacées transversalement l'une vers l'autre pour permettre leur montage entre les flasques 17 de l'extrémité avant 14 du bras d'essuie-glace 16.

Les parois latérales 40 sont prolongées vers l'avant par des extensions latérales 44, qui sont solidaires du corps principal 30. Le tronçon arrière 36 et les extensions latérales du connecteur 18 sont réalisés venus de matière avec le corps principal 30.

Les faces internes 46 des extensions latérales 44 s'étendent en regard de la partie inférieure 32 du connecteur 18, comme on peut le voir sur la figure 3. Il existe un décrochement 48 entre les faces externes des extensions latérales 44 et les faces externes des parois latérales 40 du tronçon arrière 36. Ce décrochement 48 est prolongé sur la partie supérieure du connecteur 18, entre la plaque supérieure 38 et le corps principal 30.

Les parois latérales 40 et la plaque supérieure 38 du tronçon arrière 36 du connecteur 18 comportent des bossages 50 qui sont prévus pour être engagés dans des orifices complémentaires 52 situés respectivement sur les flasques latéraux 17 et sur le dos supérieur 15 du bras d'essuie-glace 16 pour effectuer la fixation du connecteur 18 sur le bras 16. Les différents bossages 50 permettent de bloquer le bras d'essuie-glace 16 longitudinalement et transversalement.

La mise en place du bras d'essuie-glace 16 sur le connecteur 18 se fait en rapprochant les parois latérales 40 du tronçon arrière 36, puis en faisant coopérer le tronçon arrière 36 et l'avant du bras 16 de façon à ce que le bossage 52 de la face supérieure 38 soit engagée dans l'orifice correspondant 52 du dos supérieur 15 du bras 16. Enfin, les parois latérales 40 du tronçon arrière 36 sont relâchées pour revenir élastiquement à leur position verticale de repos, au contact des flasques latéraux 17, les bossages 50 étant engagés dans les orifices correspondant 52 des flasques latéraux 17 du bras 16, comme cela est illustré sur la figure 4.

Conformément aux enseignements de l'invention, le connecteur 18 est articulé sur le balai de l'essuie-glace entre une position relevée, dans laquelle les parois latérales 40 du tronçon arrière 36 sont dégagées du balai d'essuie-glace 12, et une position d'utilisation dans laquelle le connecteur 18 est au contact du balai 12. Dans la position d'utilisation, le balai 12 est reçu entre les parois latérales 40 du tronçon arrière et les extensions latérales 44 qui forment une jupe qui recouvre en partie le balai 12. Par conséquent, les parois latérales 40 ne peuvent plus être déplacées transversalement vers l'intérieur. En cours d'utilisation, et comme on peut le voir sur la figure 4, le bras 16 d'essuie-glace, qui chevauche extérieurement le tronçon arrière 36 du connecteur 18 ne peut plus être dégagé de ce dernier, car les parois latérales 40 du tronçon arrière 36 sont bloquées transversalement.

L'extrémité avant 14 du bras 16 est en appui longitudinalement vers l'avant sur une face arrière du corps principal du connecteur qui est réalisée par le décrochement 48 qui existe entre le corps principal 30 et la plaque supérieure 38 du tronçon arrière 36 d'une part, et entre les extensions latérales 44 et les parois latérales 40 du tronçon arrière 36 d'autre part.

Lorsque le bras d'essuie-glace 16 est monté sur le connecteur 18, les faces externes du corps supérieur 30 et des extensions latérales 44 sont alignées avec les faces extérieures du bras d'essuie-glace 16 pour éviter toute discontinuité qui nuirait a l'esthétique de l'essuie-glace 10.

L'essuie-glace 10 peut être monté de deux manières distinctes. En effet, on peut soit assembler en premier lieu le connecteur 18 sur le bras d'essuie-glace 16, et en second lieu l'ensemble connecteur-bras sur le balai d'essuie-glace 12, soit commencer par fixer le connecteur 18 sur le balai d'essuie-glace 12, puis, en plaçant le connecteur 18 en position relevée, fixer le bras d'essuie-glace 16 sur le connecteur 18, le bras 16 et le connecteur 18 étant ensuite rabattus en position d'utilisation sur le balai 12.

Les modes de fixation des différents composants de l'essuie-glace décrits précédemment peuvent être modifiés sans sortir du cadre de l'invention. En particulier, on pourra échanger les moyens de fixation d'une pièce à une autre et agencer des bossages sur des parois internes du bras d'essuie-glace 16, tandis que les parois latérales 40 du tronçon arrière 36 du connecteur 18 comportent des orifices complémentaires. De même, entre le connecteur 18 et le balai 12, les moyens de fixation peuvent être modifiés ou échangés.

## Revendications

1. Essuie-glace (10), notamment pour véhicule automobile, comportant un balai (12) qui est monté à une l'extrémité longitudinale avant (14) d'un bras (16) par l'intermédiaire d'un connecteur (18) articulé sur le balai (12),
l'extrémité avant (14) du bras (16) comportant deux flasques latéraux (17), le balai (12) comportant deux flancs (24), le connecteur (18) étant constitué d'un tronçon avant (32) et d'un tronçon arrière (36), le tronçon arrière (36) étant reçu entre les flasques latéraux (17) et présentant des parois latérales (40) entre lesquelles est reçu le balai en position d'utilisation,
le tronçon avant (32) portant des moyens de montage (34) sur le balai (12),
caractérisé en ce que le tronçon avant (32) est reçu entre les flancs (24) du balai (12).

2. Essuie-glace selon le revendication 1, caractérisé en ce que les parois latérales (40) sont déformables élastiquement des moyens de fixation (50) porté s par les parois latérales (40) coopérant avec des moyens complémentaires (52) de fixation agencés sur les flasques latéraux (17) en position de fixation, et en ce que les parois latérales (40) sont maintenues en position de fixation par le balai (12) en position d'utilisation.

3. Essuie-glace (10) selon la revendication 1 ou 2, caractérisé en ce que les moyens de fixation portés par le connecteur (18) sont réalisés sous la forme de bossages (50) agencés sur des faces externes des parois latérales (40) du tronçon arrière (36) du connecteur (18) et en ce que les moyens complémentaires portés par les flasques (17) du bras (16) sont réalisés sous la forme d'orifices (52) dans lesquels sont engagés les bossages (50).

4. Essuie-glace (10) selon la revendication 3, caractérisé en ce que le bras (16) de l'essuie-glace (10) comporte un dos supérieur transversal (15) qui réunit les flasques latéraux (17), et en ce que le dos (15) comporte un orifice (52) dans lequel est engagé un bossage (50) agencé sur une face supérieure (38) du tronçon arrière (36) du connecteur (18) pour bloquer longitudinalement le connecteur (18) par rapport au bras (16), la face supérieure (38) du tronçon arrière (36) étant prolongée verticalement vers le bas par les parois latérales (40).

5. Essuie-glace (10) selon l'une quelconque des revendications précédentes, caractérisé en ce que le corps principal (30) du connecteur (18) est en appui longitudinalement vers l'arrière par une face transversale arrière contre une face transversale avant de l'extrémité avant du bras.

6. Essuie-glace (10) selon l'une quelconque des revendications précédentes, caractérisé en ce que le corps principal (30) avant est prolongé vers le bas par une partie inférieure (32) comportant des moyens de fixation et d'articulation du connecteur (18) qui coopèrent avec des moyens complémentaires du balai d'essuie-glace (12).

7. Essuie-glace (10) selon la revendication 6, caractérisé en ce que le balai d'essuie-glace (12) comporte une ouverture supérieure dans laquelle est reçue la partie inférieure (32) du connecteur (18), et en ce que le balai comporte une tige transversale d'articulation (26), qui relie les flancs latéraux parallèles (24) du balai (12), sur laquelle est articulée la partie inférieure (32) du connecteur (18).

8. Essuie-glace (10) selon la revendication 7, caractérisé en ce que la partie inférieure (32) du connecteur (18) comporte des pinces élastiques (34) qui enserrent la tige transversale (26) du balai d'essuie-glace (12) pour réaliser l'articulation du connecteur (18) par rapport au balai (12).

9. Essuie-glace (10) selon l'une quelconque des revendications 6 à 8, caractérisé en ce que les parois latérales (40) du tronçon arrière (36) du connecteur (18) sont prolongées vers l'avant par des extensions latérales (44), qui sont solidaires du corps principal (30) du connecteur (18) et qui s'étendent sensiblement verticalement en regard de la partie inférieure (32), chacune d'un coté de celle-ci.

10. Essuie-glace (10) selon l'une quelconque des revendications précédentes, caractérisé en ce que des faces externes du corps principal du connecteur (18) et des extensions latérales (44) sont agencées dans le prolongement de faces externes correspondantes de l'extrémité avant (14) du bras (16).
